# FASCICULE DE BREVET EUROPEEN

(11) **EP 1 924 767 B1**
(45) Date de publication et mention de la délivrance du brevet: **26.10.2011**
(21) Numéro de dépôt: 06808109.0
(22) Date de dépôt: 12.09.2006
(51) Int. Cl.: F02M 25/07

(54) **MODULE D'ÉCHANGE DE CHALEUR POUR LA RÉGULATION EN TEMPÉRATURE D'UN MÉLANGE DE GAZ ADMIS DANS UN MOTEUR THERMIQUE DE VÉHICULE AUTOMOBILE**
WÄRMEAUSTAUSCHMODUL ZUM EINSTELLEN DER HEAT TEMPERATUR EINER EINLASSGASMISCHUNG IN EINEM VERBRENNUNGSMOTOR
HEAT EXCHANGE MODULE FOR ADJUSTING THE TEMPERATURE OF AN INTAKE GAS MIXTURE IN AN INTERNAL COMBUSTION ENGINE

(30) Priorité: 12.09.2005 FR 0509288
(43) Date de publication de la demande: 28.05.2008
(73) Titulaire: VALEO SYSTEMES THERMIQUES, 78321 Le Mesnil St Denis Cedex (FR)
(72) Inventeur: POTIER, Michel, F-78120 Rambouillet (FR); LATHIERE, Jean, F-92800 Puteaux (FR); GESSIER, Bertrand, 78490 Montfort-L'amaury (FR)
(74) Mandataire: Rolland, Jean-Christophe
(86) Numéro de dépôt international: PCT/FR2006/002083
(87) Numéro de publication internationale: WO 2007/031635

(56) Documents cités:
- FR-A- 2 840 363
- FR-A- 2 856 745
- FR-A- 2 856 746
- FR-A- 2 856 747
- FR-A- 2 864 582

## Description

L'invention se rapporte aux échangeurs de chaleur pour refroidir ou réchauffer un mélange de gaz admis dans les chambres de combustion d'un.moteur thermique de véhicule automobile.

Elle concerne plus particulièrement un module d'échange de chaleur pour la régulation en température d'un mélange d'air d'admission et de gaz d'échappement recirculés admis dans un moteur thermique de véhicule automobile, ce module comprenant un refroidisseur d'air d'alimentation, un refroidisseur des gaz d'échappement recirculés, et des moyens de distribution de l'air d'alimentation et des gaz d'échappement recirculés.

On sait que les moteurs thermiques turbo-compressés, en particulier les moteurs diesel ou à essence, sont alimentés par un air sous pression appelé « air de suralimentation », provenant d'un turbo-compresseur alimenté par les gaz d'échappement du moteur.

Il est nécessaire de refroidir cet air avant son admission dans le moteur. On utilise pour cela, de manière classique, un échangeur appelé « refroidisseur d'air de suralimentation » ou, plus généralement, « refroidisseur d'air d'alimentation ».

Par ailleurs, il est connu de recirculer une partie des gaz d'échappement vers l'admission du moteur pour qu'ils soient plus complètement brûlés. Mais comme ces gaz sont à une température maximale très élevée (400°C à 900°C), il est connu de les refroidir en les faisant circuler dans un autre échangeur appelé « refroidisseur des gaz d'échappement recirculés ».

Dans un module du type précité, les moyens de distribution permettent de dériver ou contourner le refroidisseur d'air de suralimentation, soit ponctuellement, soit pour améliorer la montée en température du moteur en phase de démarrage à froid. Ces moyens permettent également de dériver ou contourner le refroidisseur des gaz d'échappement recirculés pour maîtriser la température du mélange des gaz afin de réduire la pollution en phase de démarrage à froid.

Ces moyens de distribution comportent en outre, de façon habituelle, des organes de répartition, tels que des vannes, qui ont notamment pour fonction de répartir l'air d'admission entre le refroidisseur d'air d'alimentation et la dérivation qui le contourne, et de répartir les gaz d'échappement recirculés entre le refroidisseur des gaz d'échappement recirculés et la dérivation qui le contourne.

La demande de brevet français 03 15382 divulgue un module d'échange de chaleur du type précité. Un autre exemple est connu du document FR-A-2856746.

Les modules d'échange de chaleur de ce type comprennent essentiellement un boîtier qui loge les deux refroidisseurs et qui incorpore un certain nombre de composants pour assurer la distribution de l'air d'alimentation et des gaz d'échappement recirculés.

L'invention a essentiellement pour but de simplifier la construction d'un tel module, notamment pour en réduire le nombre de composants, et pour en simplifier l'assemblage et la maintenance.

Elle propose à cet effet un module d'échange de chaleur tel que défini dans la revendication 1.

Pour cela, ledit boîtier est muni, notamment, de zones d'accrochage du ou desdits blocs techniques rapportés et d'orifices de communication entre le ou lesdits blocs et un volume intérieur défini par les parois du boîtier, les gaz traversant le ou lesdits blocs puis lesdits orifices de communication avant de pénétrer dans ledit volume.

Le ou lesdits blocs techniques sont rapportés, par exemple, du même côté dudit boîtier de manière à définir une zone d'échange de chaleur (ZE) et une zone de distribution (ZD) distinctes l'une de l'autre.

Ainsi, le boîtier proprement dit loge les deux refroidisseurs et forme une partie dédiée à l'échange de chaleur. En revanche, les moyens de distribution, qui comportent essentiellement des dérivations et des vannes d'orientation du flux et/ou de réglage du débit, sont incorporés dans un ou plusieurs blocs techniques, c'est-à-dire un ou plusieurs composants, qui sont rapportés sur un même côté du boîtier en constituant ainsi une partie technique dédiée à la distribution.

L'avantage qui en résulte est de former deux zones distinctes l'une de l'autre, l'une dédiée à l'échange de chaleur et l'autre dédiée à la distribution.

La réalisation du module s'en trouve simplifiée du fait de la diminution du nombre de composants qui en résulte.

Ceci a pour autre avantage de faciliter le montage ou l'assemblage du module d'échange de chaleur et également de faciliter les interventions, notamment à des fins de réparation.

D'autres caractéristiques complémentaires sont indiquées ci-après.
- les moyens de distribution comprennent une première dérivation de contournement du refroidisseur d'air d'alimentation, des premiers moyens de contrôle d'écoulement de l'air d'admission, une seconde dérivation de contournement du refroidisseur des gaz d'échappement, recirculés, et des seconds moyens de contrôle d'écoulement des gaz d'échappement recirculés ;
- les premiers moyens de contrôle d'écoulement de l'air d'admission comprennent des moyens de réglage de débit de l'air d'admission et des moyens de répartition qui répartissent l'air d'admission entre le refroidisseur d'air d'admission et la première dérivation ;
- les moyens de réglage de débit de l'air d'admission comprennent une vanne à volet, notamment papillon ;
- la vanne à clapet comprend un corps muni d'une tubulure d'entrée pour l'air d'admission et d'une bride de fixation pour son montage sur le boîtier ;
- les moyens de répartition de l'air d'admission comprennent une vanne avec un volet de répartition ;
- la vanne avec un volet de répartition comprend un corps propre à être fixé sur le boîtier pour contribuer à définir la première dérivation ;
- les seconds moyens de contrôle d'écoulement des gaz d'échappement recirculés comprennent des moyens de réglage de débit des gaz d'échappement recirculés et des moyens de répartition qui répartissent les gaz d'échappement recirculés entre le refroidisseur des gaz d'échappement recirculés et la seconde dérivation ;
- les moyens de réglage de débit des gaz d'échappement recirculés et les moyens de répartition des gaz d'échappement recirculés comprennent une vanne combinée ;
- la vanne combinée comprend un organe mobile monté en rotation et propre à obturer sélectivement un premier orifice formé dans une paroi de siège communiquant avec le refroidisseur des gaz d'échappement recirculés ou un deuxième orifice formé dans la paroi de siège et communiquant avec la deuxième dérivation, ledit organe mobile étant en outre déplaçable axialement entre une position rapprochée et une position éloignée de la paroi de siège ;
- la vanne combinée comprend un corps muni d'une tubulure d'entrée pour les gaz d'échappement recirculés et d'une bride de fixation pour son montage sur le boîtier ;
- les première et seconde dérivations débouchent dans ladite chambre de sortie par des orifices ménagés dans la paroi dudit boîtier ;
- ladite chambre de sortie débouche sur une tubulure de sortie définie par les parois dudit boîtier ;
- la chambre de sortie du boîtier forme le plénum d'une chambre d'admission d'un moteur thermique.

Dans la description qui suit, faite seulement à titre d'exemple, on se réfère aux dessins annexés, sur lesquels :
- la figure 1 est un schéma de principe d'un module d'échange de chaleur selon l'invention ;
- la figure 2 est une vue en perspective éclatée d'un module d'échange de chaleur selon l'invention ;
- la figure 3 est une vue analogue à la figure 2 qui fait apparaître la zone d'échange et la zone de distribution du module d'échange de chaleur ;
- la figure 4 est une vue en coupe d'une vanne combinée servant au dosage et à la répartition des gaz d'échappement recirculés ; et
- la figure 5 est une vue de dessus d'une paroi formant le siège de la vanne de la figure 4.

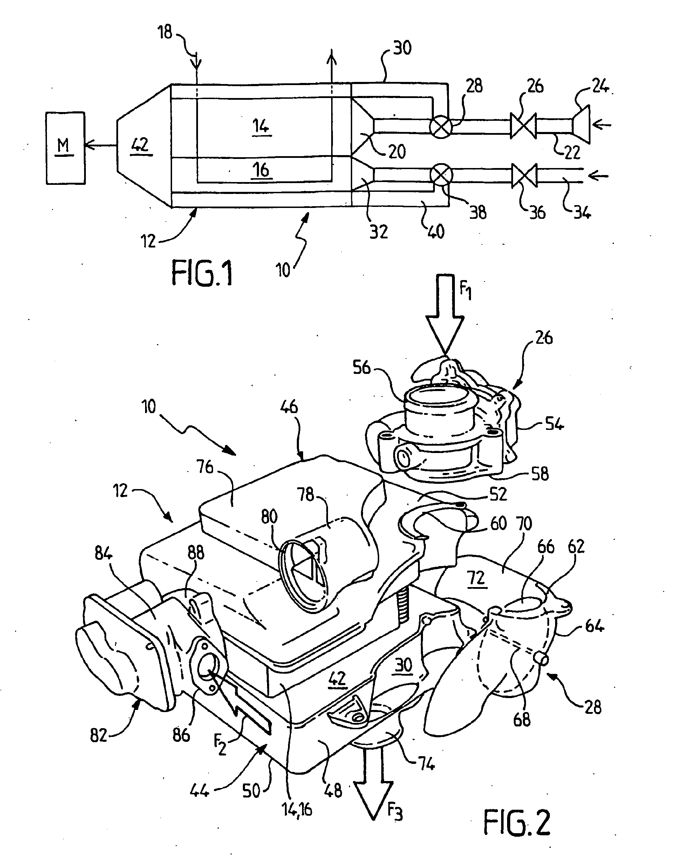

On se réfère d'abord à la figure 1 qui montre, de façon schématique, un module d'échange de chaleur 10 pour la régulation en température d'un mélange d'air d'admission et de gaz d'échappement recirculés admis dans un moteur thermique M de véhicule-automobile.

Le module 10 comprend un boîtier 12 logeant deux échangeurs de chaleur, à savoir un refroidisseur d'air d'alimentation 14 et un refroidisseur de gaz d'échappement recirculés 16. Ces deux échangeurs de chaleur sont avantageusement des échangeurs du type à plaques et ils sont refroidis par un circuit 18, représenté schématiquement, parcouru par un liquide de refroidissement, habituellement le liquide de refroidissement du moteur.

Le refroidisseur d'air d'alimentation 14 est muni d'une boîte d'entrée 20 reliée à un conduit 22 alimenté en air d'alimentation ou de suralimentation provenant d'un turbo-compresseur 24 actionné, de façon en soi connue, par les gaz d'échappement du moteur. Sur le conduit 22 sont montées successivement une vanne de réglage de débit 26 et une vanne de répartition 28, réalisée sous la forme d'une vanne à trois voies qui contrôle également une première dérivation 30. ainsi, l'air d'alimentation, préalablement dosé par la vanne 26, peut être réparti sélectivement entre la boîte d'entrée 20 menant au refroidisseur 14 et la première dérivation 30 contournant le refroidisseur 14.

De manière similaire, le refroidisseur des gaz d'échappement recirculés 16 est relié à une boîte d'entrée 32, elle-même reliée à un conduit 34 alimenté les gaz d'échappement recirculés, ces derniers constituant une fraction prélevée sur les gaz d'échappement brûlés qui s'échappent du moteur M.

Sur le conduit 34 sont montées successivement une vanne de réglage de débit 36 et une vanne de répartition 38, ici une vanne à trois voies, qui permet de répartir les gaz d'échappement recirculés, préalablement dosés par la vanne 36, entre la boîte d'entrée 32 menant au refroidisseur 16 et une seconde dérivation 40 contournant le refroidisseur 16.

L'air d'alimentation provenant du refroidisseur d'alimentation 14 et/ou de la première dérivation 30, de même que les gaz d'échappement recirculés provenant du refroidisseur 16 et/ou de la seconde dérivation 40 sont collectés dans une boîte de sortie 42 qui envoie le mélange vers l'admission du moteur thermique M.

Comme on le verra plus loin, il est possible de regrouper le cas échéant certaines vannes. ainsi, les vannes 36 et 38 qui assurent respectivement le dosage des gaz d'échappement recirculés et leur répartition peuvent être confondues en une seule vanne, ou vanne combinée, assurant les deux fonctions précitées.

Il est fait maintenant référence à la figure 2 qui montre un exemple de réalisation d'un module d'échange de chaleur selon l'invention.

Le module 10 comprend un boîtier 12 de forme générale parallélépipédique comportant un fond 44 et un couvercle 46 qui une fois assemblés, logent les deux échangeurs de chaleur, à savoir les refroidisseurs 14 et 16. Dans l'exemple, ces deux échangeurs sont formés par un assemblage de plaques empilées et sont traversés par un liquide de refroidissement au moyen de tubulures (non représentées) qui débouchent sur une face du boîtier.

Les deux refroidisseurs 14 et 16 n'occupent pas entièrement le volume intérieur défini dans le boîtier, ce qui permet de délimiter une boîte ou chambre de sortie 42 dans laquelle s'effectue le mélange des gaz (air d'alimentation et gaz d'échappement recirculés) avant leur admission dans le moteur thermique M. Cette chambre 42, qui a un volume sensiblement parallélépipédique, s'étend le long d'un côté 48 du boîtier qui est situé du côté droit de la figure 2.

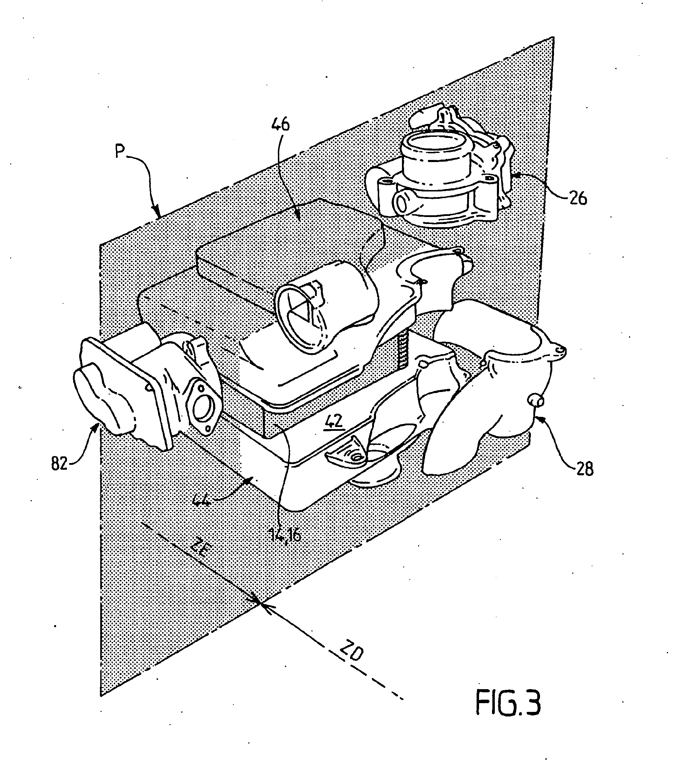

Comme le montre la figure 3, un plan virtuel P situé verticalement, c'est-à-dire perpendiculairement à la face inférieure 50 du fond de boîtier et parallèlement au côté 48, délimite deux zones, à savoir une zone d'échange ZE du côté gauche, dans laquelle sont situés deux refroidisseurs 14 et 16, et une zone de distribution ZD, du côté droit, dans laquelle se trouve la chambre de sortie 42. La zone d'échange ZE est représentée en grisé sur la figure 3 pour bien la distinguer de la zone de distribution ZD.

Dans la zone de distribution ZD se trouvent un certain nombre de composants, qui seront décrits ci-après, et qui permettent la distribution de l'air d'alimentation et des gaz d'échappement recirculés. Par l'expression « moyens de distribution », on entend désigner des moyens de contrôle d'écoulement qui permettent de régler le débit de l'air d'alimentation et de le répartir ensuite entre le refroidisseur 14 et la première dérivation 30, ainsi que des moyens de contrôle d'écoulement qui permettent de doser les gaz d'échappement recirculés et de les répartir ensuite entre le refroidisseur 16 et la seconde dérivation 40.

Les moyens de contrôle d'écoulement de l'air d'admission comprennent des moyens de réglage de débit (vanne 26) et des moyens de répartition (vanne 28) pour répartir l'air d'admission entre le refroidisseur d'air d'admission 14 et la première dérivation 30.

La vanne de réglage de débit 26 est réalisée sous la forme d'un bloc séparé destiné à être fixé sur une face supérieure 52 du couvercle 46, à proximité du côté 48. La vanne 26 est une vanne à volet, c'est-à-dire incorporant un organe mobile du type papillon (non visible sur les figures 2 et 3). La vanne comprend un corps 54 muni d'une tubulure d'entrée 56 pour l'air d'alimentation (flèche F1) et d'une bride de fixation 58 pour son montage sur la face supérieure 52 du boîtier.

Le corps de la vanne est monté sur une demi-collerette 60 du boîtier et sur une demi-collerette 62 faisant partie du corps 64 de la vanne de répartition 28. Le corps de vanne 64 loge un volet de répartition 66 qui a ici la forme d'un volet papillon monté pivotant autour d'un axe 68. Le corps de vanne 64 comporte une paroi conformée 70 qui contribue à définir, conjointement avec des formes appropriées du fond et du couvercle du boîtier, un conduit d'entrée 72 alimentant le refroidisseur d'air d'alimentation 14 et un conduit de dérivation 30 débouchant sur une tubulure de sortie 74 aménagée dans le fond du boîtier, du côté 48. La tubulure de sortie 74 communique avec la chambre de sortie 42 pour l'évacuation du mélange de gaz (flèche F3).

Ainsi, l'air d'alimentation est dosé par la vanne 26 puis ensuite réparti, par la vanne 28, entre le refroidisseur 14 et la dérivation 30.

Le corps 54 de la vanne 26 et le corps 64 de la vanne 28 constituent tous deux des blocs techniques rapportés sur le boîtier du côté 48, donc du côté de la zone de distribution ZD (figure 3).

Le couvercle 46 du boîtier est surmonté par un bossage 76 comportant une tubulure 78 munie d'une entrée circulaire 80. Cette entrée 80 sert au montage d'une vanne combinée 82 qui regroupe les fonctions des vannes 36 et 38 (figure 1) assurant respectivement le dosage et la répartition des gaz d'échappement recirculés. Ladite tubulure 78 sur laquelle est montée la vanne combinée 82 est divisée en deux conduits, un premier conduits alimentant le refroidisseur des gaz recirculés et un second conduit définissant la dite seconde dérivation.

Cette vanne combinée 82, qui forme également un bloc technique rapporté sur le côté 48 du boîtier, permet de contrôler l'écoulement donc la distribution des gaz d'échappement recirculés. La vanne 82 permet ainsi de régler le débit des gaz d'échappement recirculés et de les répartir entre le refroidisseur 16 et la dérivation 40 (figure 1).

La vanne 82, qui forme donc une vanne unique, comprend un corps 84 muni d'une tubulure d'entrée 86 pour les gaz d'échappement recirculés (flèche F2) et d'une bride de fixation 88 pour son montage sur le boîtier, c'est-à-dire sur l'entrée circulaire 80 de la tubulure 78. L'axe de la tubulure 78 s'étend parallèlement et à proximité du côté 48 du boîtier. Il en résulte, là aussi, que la vanne 82 se situe dans la zone de distribution ZD comme on le voit sur la figure 3. L'air d'alimentation et les gaz d'échappement recirculés sont mélangés dans la chambre de sortie 42 et quittent cette dernière par la tubulure de sortie 74 (flèche F3 sur la figure 2).

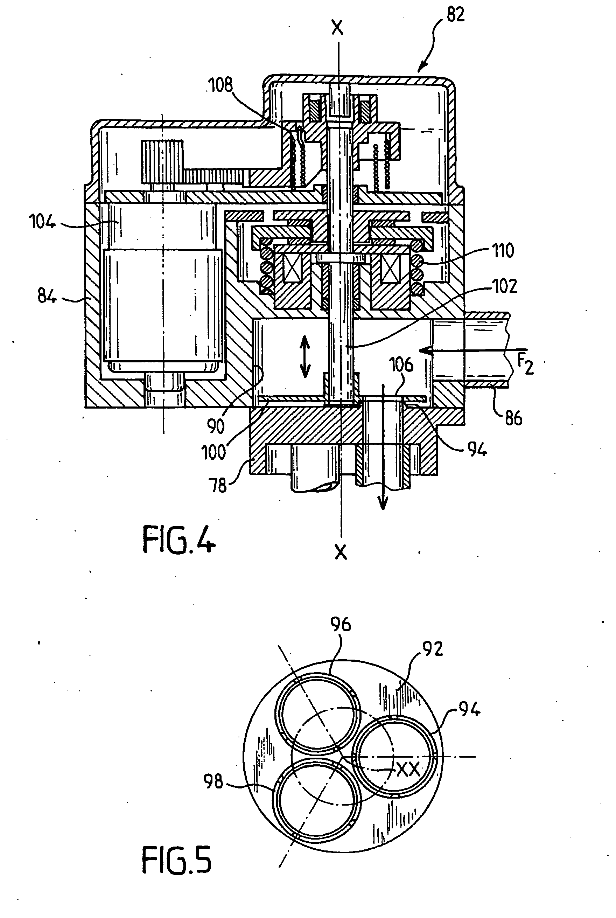

On se réfère maintenant aux figures 4 et 5 pour décrire la vanne combinée 82, dans un exemple de réalisation.

On retrouve sur la figure 4 le corps 84 de la vanne 82 et la tubulure d'entrée 86 pour les gaz d'échappement recirculés (flèche F2). Cette tubulure 86 débouche latéralement dans une paroi latérale du boîtier pour alimenter une chambre 90 de forme générale cylindrique qui communique avec la tubulure 78 du couvercle du boîtier. Cette tubulure 78 comporte une paroi 92 formant paroi de siège (figure 5) dans laquelle sont formées trois collerettes, dans l'exemple de forme générale circulaire, disposées à 120° autour d'un axe centrale XX. Ces collerettes comportent une première collerette 94 qui constitue un premier orifice communiquant avec le refroidisseur des gaz d'échappement recirculés, et une deuxième collerette 96 formant un deuxième orifice communiquant avec la deuxième dérivation 40. La paroi de siège 92 comporte en outre une troisième collerette 98 qui est réalisée-borgne.

La vanne 82 comprend un organe mobile 100, réalisé sous la forme d'un disque, monté à l'extrémité d'un arbre 102 susceptible d'être entraîné en rotation suivant un axe XX par l'intermédiaire d'un moteur électrique 104 et d'un système d'engrenages. L'organe mobile 100 comporte un orifice de passage 106 et peut être entraîné en rotation entre deux positions extrêmes, à savoir :
- une première position extrême dans laquelle l'orifice de passage 106 s'étend en regard de la collerette 94 et donc du conduit menant au refroidisseur des gaz d'échappement recirculés (l'organe mobile 100 dégage alors l'accès au refroidisseur et ferme l'accès à la dérivation 40) ; et
- une deuxième position extrême dans laquelle l'orifice de passage 106 se trouve en regard de la collerette 96 et donc de la dérivation 40 (l'organe 100 dégage alors la dérivation 40 et obture l'accès au refroidisseur des gaz d'échappement recirculés).

Entre ces deux positions extrêmes, le disque peut prendre une position intermédiaire dans laquelle l'orifice de passage se trouve en regard de la collerette borgne 98, le disque obturant alors les deux collerettes. Le disque peut également prendre d'autres positions intermédiaires qui permettent de contrôler sélectivement la répartition des gaz d'échappement recirculés entre le refroidisseur 16 et sa dérivation 40, tout en permettant un dosage.

Par ailleurs, le disque est déplaçable axialement sous l'action d'une bobine 108 et à l'encontre de la force d'un ressort de rappel 110. Il peut ainsi occuper soit une position rapprochée soit une position éloignée de la paroi de siège 92.

Lorsque le moteur thermique M n'est pas en fonctionnement, le moteur électrique 104 et la bobine 108 ne sont pas alimentés, le ressort 110 maintient le disque 100 dans une position écartée ou décollée de la paroi de siège 92. La gestion de la recirculation des gaz d'échappement est assurée de façon connue en elle-même par l'unité de contrôle moteur ou une unité dédiée connue en elle-même, à laquelle est relié le moteur électrique et au moins indirectement la bobine.

Lorsque le moteur thermique M est dans une phase de recirculation des gaz d'échappement, le moteur électrique 104 est commandé de manière à amener le disque 100 vers l'une ou l'autre de ses deux positions extrêmes selon que l'on souhaite diriger les gaz d'échappement recirculés soit vers le refroidisseur soit vers la dérivation. Le disque peut également être amené dans des positions intermédiaires qui permettent de doser les gaz d'échappement recirculés ainsi que leur répartition.

Bien entendu, au lieu d'utiliser une vanne unique ou combinée 82, on pourrait utiliser deux vannes distinctes 36 et 38 comme montré sur la figure 1.

ainsi, dans l'exemple représenté, le module comporte trois blocs techniques rapportés sur le boîtier le long ou à proximité du côté 48 de ce dernier, c'est-à-dire dans la zone de distribution.

L'invention est susceptible de nombreuses variantes. ainsi, la chambre de sortie 42, dans laquelle s'effectue le mélange de l'air d'alimentation et des gaz d'échappement recirculés, pourrait être intégrée directement au moteur thermique M. En ce cas, elle formerait directement le plenum d'une chambre d'admission du moteur thermique.

L'invention trouve une application aux moteurs thermiques de véhicules automobiles, qu'il s'agisse de moteurs à essence ou de moteurs diesel.

## Revendications

1. Module d'échange de chaleur pour la régulation en température d'un mélange d'air d'admission et de gaz d'échappement recirculés admis dans un moteur thermique (M) de véhicule automobile, comprenant un refroidisseur d'air d'alimentation (14), un refroidisseur des gaz d'échappement recirculés (16), et des moyens de distribution de l'air d'alimentation et des gaz d'échappement recirculés, le modrule. comprenant un boîtier (12) logeant le refroidisseur d'air d'alimentation (14) et le refroidisseur des gaz d'échappement recirculés (16), ainsi qu'au moins un bloc technique (26, 28, 82) rapporté sur un côté (48) dudit boîtier (12) et logeant les moyens de distribution, le boîtier (12) délimitant une chambre de sortie commune (42) dans laquelle se mélangent l'air d'admission (refroidi ou non par le refroidisseur d'air d'alimentation) et les gaz d'échappement recirculés (refroidis ou non par le refroidisseur des gaz d'échappement recirculés), **caractérisé en ce que** la chambre de sortie (42) s'étend sensiblement le long du côté (48) du boîtier (12) sur lequel est (sont) rapporté(s) le(s) bloc(s) technique(s) (26, 28, 82).

2. Module d'échange de chaleur selon la revendication 1 dans lequel le ou lesdits blocs techniques sont rapportés du même côté dudit boîtier de manière à définir une zone d'échange de chaleur (ZE) et une zone de distribution (ZD) distinctes l'une de l'autre.

3. Module d'échange de chaleur selon la revendication 1 ou 2, **caractérisé en ce que** les moyens de distribution comprennent une première dérivation de contournement (30) du refroidisseur d'air d'alimentation (14), des premiers moyens de contrôle d'écoulement (26, 28) de l'air d'admission, une seconde dérivation de contournement (40) du refroidisseur des gaz d'échappement recirculés (16), et/ou des seconds moyens de contrôle d'écoulement (36, 38 ; 82) des gaz d'échappement recirculés.

4. Module d'échange de chaleur selon la revendication 3, **caractérisé en ce que** les premiers moyens de contrôle d'écoulement de l'air d'admission comprennent des moyens de réglage de débit (26) de l'air d'admission et des moyens de répartition (28) qui répartissent l'air d'admission entre le refroidisseur d'air d'admission (14) et la première dérivation (30).

5. Module d'échange de chaleur selon la revendication 4, **caractérisé en ce que** les moyens de réglage de débit de l'air d'admission comprennent une vanne à volet (26).

6. Module d'échange de chaleur selon la revendication 5, **caractérisé en ce que** la vanne à volet (26) comprend un corps (54) muni d'une tubulure d'entrée (56) pour l'air d'admission et d'une bride de fixation (58) pour son montage sur le boîtier (12).

7. Module d'échange de chaleur selon l'une des revendications 4 à 6, **caractérisé en ce que** les moyens de répartition de l'air d'admission comprennent une vanne (28) avec un volet de répartition (66).

8. Module d'échange de chaleur selon la revendication 7, **caractérisé en ce que** la vanne (28) avec un volet de répartition (66) comprend un corps (64) propre à être fixé sur le boîtier (12) pour contribuer à définir la première dérivation (30).

9. Module d'échange de chaleur selon l'une des revendications 3 à 8, **caractérisé en ce que** les seconds moyens de contrôle d'écoulement des gaz d'échappement recirculés comprennent des moyens de réglage de débit (36) des gaz d'échappement recirculés et des moyens de répartition (38) qui répartissent les gaz d'échappement recirculés entre le refroidisseur des gaz d'échappement recirculés (16) et la seconde dérivation (40).

10. Module d'échange de chaleur selon la revendication 9, **caractérisé en ce que** les moyens de réglage de débit (36) des gaz d'échappement recirculés et les moyens de répartition (38) des gaz d'échappement recirculés comprennent une vanne combinée (82).

11. Module d'échange de chaleur selon la revendication 10, **caractérisé en ce que** la vanne combinée (82) comprend un organe mobile (100) monté en rotation et propre à obturer sélectivement un premier orifice (94) formé dans une paroi de siège (92) communiquant avec le refroidisseur des gaz d'échappement recirculés ou un deuxième orifice (96) formé dans la paroi de siège (92) et communiquant avec la deuxième dérivation (40), ledit organe mobile (100) étant en outre déplaçable axialement entre une position rapprochée et une position éloignée de la paroi de siège.

12. Module d'échange de chaleur selon l'une des revendications 10 et 11, **caractérisé en ce que** la vanne combinée (82) comprend un corps (84) muni d'une tubulure d'entrée (86) pour les gaz d'échappement recirculés et d'une bride de fixation (88) pour son montage sur le boîtier (12).

13. Module d'échange de chaleur selon la revendication 1, **caractérisé en ce que** la chambre de sortie (42) du boîtier (12) forme le plénum d'une chambre d'admission d'un moteur thermique.

## Claims

1. Heat exchange module for the temperature regulation of a mixture of intake air and recirculated exhaust gases admitted to a motor vehicle combustion engine (M), comprising a charge air cooler (14), an exhaust gas recirculation cooler (16) and distribution means for distributing the charge air and the recirculated exhaust gases,
**characterized in that** it comprises a housing (12) housing the charge air cooler (14) and the exhaust gas recirculation cooler (16), and at least one technical unit (26, 28, 82) attached to one side (48) of the said housing (12) and housing the distribution means, **in that** the housing (12) delimits a common outlet chamber (42) in which the intake air (which may or may not have been cooled by the charge air cooler) and the recirculated exhaust gases (which may or may not have been cooled by the exhaust gas recirculation cooler) are mixed, and **in that** the outlet chamber (42) extends substantially along the side (48) of the housing (12) to which the technical unit(s) (26, 28, 82) is(are) attached.

2. Heat exchange module according to Claim 1, in which the said technical unit or units are attached on the same side of the said housing so as to define a heat exchange zone (ZE) and a distribution zone (ZD) which zones are distinct from one another.

3. Heat exchange module according to Claim 1 or 2, **characterized in that** the distribution means comprise a first bypass tapping (30) to bypass the charge air cooler (14), first flow control means (26, 28) to control the flow of the intake air, a second bypass tapping (40) to bypass the exhaust gas recirculation cooler (16), and/or second flow control means (36, 38; 82) to control the flow of the recirculated exhaust gases.

4. Heat exchange module according to Claim 3, **characterized in that** the first, intake air flow control means comprise flow rate regulating means (26) for regulating the flow rate of the intake air and splitting means (28) which split the intake air between the intake air cooler (14) and the first tapping (30).

5. Heat exchange module according to Claim 4, **characterized in that** the intake air flow rate regulating means comprise a flap valve (26).

6. Heat exchange module according to Claim 5, **characterized in that** the flap valve (26) comprises a body (54) equipped with an inlet pipe (56) for the intake air and with a fixing flange (58) for mounting it on the housing (12).

7. Heat exchange module according to one of Claims 4 to 6, **characterized in that** the intake air splitting means comprise a valve (28) with a splitter flap (66).

8. Heat exchange module according to Claim 7, **characterized in that** the valve (28) with a splitting flap (66) comprises a body (64) that can be attached to the housing (12) to contribute to defining the first tapping (30).

9. Heat exchange module according to one of Claims 3 to 8, **characterized in that** the second, recirculated exhaust gas flow control means comprise flow rate regulating means (36) for regulating the flow rate of the recirculated exhaust gases and splitter means (38) which split the recirculated exhaust gases between the exhaust gas recirculation cooler (16) and the second tapping (40).

10. Heat exchange module according to Claim 9, **characterized in that** the recirculated exhaust gas flow rate regulating means (36) and the recirculated exhaust gas splitting means (38) comprise a combined valve (82).

11. Heat exchange module according to Claim 10, **characterized in that** the combined valve (82) comprises a moving part (100) mounted such that it can rotate and capable selectively of closing off a first orifice (94) formed in a seat wall (92) communicating with the exhaust gas recirculation cooler or a second orifice (96) formed in the seat wall (92) and communicating with the second tapping (40), the said moving part (100) also being movable axially between a position close to and a position distant from the seat wall.

12. Heat exchange module according to one of Claims 10 and 11, **characterized in that** the combined valve (82) comprises a body (84) equipped with an inlet pipe (86) for the recirculated exhaust gases and with a fixing flange (88) for mounting it on the housing (12).

13. Heat exchange module according to Claim 1, **characterized in that** the outlet chamber (42) of the housing (12) forms the plenum of a combustion engine intake chamber.

## Patentansprüche

1. Wärmeaustauschmodul für die Temperaturregulierung eines einer Brennkraftmaschine (M) eines Kraftfahrzeugs zugeführten Gemisches aus Einlassluft und rückgeführten Abgasen, mit einem Kühler (14) für Zufuhrluft, einem Kühler (16) für rückgeführte Abgase und mit Mitteln zum Verteilen der Zufuhrluft und der rückgeführten Abgase,
**dadurch gekennzeichnet, dass** es ein Gehäuse (12), in dem der Kühler (14) für Zufuhrluft und der Kühler (16) für rückgeführte Abgase untergebracht sind, sowie wenigstens einen Technikblock (26, 28, 82), der auf einer Seite (48) des Gehäuses (12) angefügt ist und in dem die Verteilungsmittel untergebracht sind, umfasst, dass das Gehäuse (12) eine gemeinsame Austrittskammer (42) begrenzt, in der sich die Einlassluft (durch den Kühler für Zufuhrluft gekühlt oder nicht) und die rückgeführten Abgase (durch den Kühler für rückgeführte Abgase gekühlt oder nicht) vermischen, und dass sich die Austrittskammer (42) im Wesentlichen längs der Seite (48) des Gehäuses (12) erstreckt, auf der der eine oder die mehreren Technikblöcke (26, 28, 82) angefügt sind.

2. Wärmeaustauschmodul nach Anspruch 1, wobei der eine oder die mehreren Technikblöcke auf derselben Seite des Gehäuses angefügt sind, derart, dass eine Wärmeaustauschzone (ZE) und eine Verteilungszone (ZD), die voneinander verschieden sind, definiert sind.

3. Wärmeaustauschmodul nach Anspruch 1 oder 2, **dadurch gekennzeichnet, dass** die Verteilungsmittel eine erste Umleitung (30) des Kühlers (14) für Zufuhrluft, erste Strömungssteuermittel (26, 28) für die Einlassluft, eine zweite Umleitung (40) des Kühlers (16) für rückgeführte Abgase und/oder zweite Strömungssteuermittel (36, 38; 82) für die rückgeführten Abgase umfassen.

4. Wärmeaustauschmodul nach Anspruch 3, **dadurch gekennzeichnet, dass** die ersten Strömungssteuermittel für die Einlassluft Durchsatzregulierungsmittel (26) für die Einlassluft und Aufteilungsmittel (28), die die Zufuhrluft zwischen dem Zufuhrluftkühler (14) und der ersten Umleitung (30) aufteilen, umfassen.

5. Wärmeaustauschmodul nach Anspruch 4, **dadurch gekennzeichnet, dass** die Durchsatzregulierungsmittel für die Einlassluft ein Klappenventil (26) umfassen.

6. Wärmeaustauschmodul nach Anspruch 5, **dadurch gekennzeichnet, dass** das Klappenventil (26) einen Körper (54) umfasst, der mit einem Eintrittsrohr (56) für die Einlassluft und mit einem Befestigungssteg (58) für seine Montage am Gehäuse (12) versehen ist.

7. Wärmeaustauschmodul nach einem der Ansprüche 4 bis 6, **dadurch gekennzeichnet, dass** die Aufteilungsmittel für die Zufuhrluft ein Ventil (28) mit Aufteilungsklappe (66) umfassen.

8. Wärmeaustauschmodul nach Anspruch 7, **dadurch gekennzeichnet, dass** das Ventil (28) mit Aufteilungsklappe (66) einen Körper (64) umfasst, der an dem Gehäuse (12) befestigt werden kann, um zu der Definition der der ersten Umleitung (30) beizutragen.

9. Wärmeaustauschmodul nach einem der Ansprüche 3 bis 8, **dadurch gekennzeichnet, dass** die zweiten Strömungssteuermittel für die rückgeführten Abgase Mittel (36) zum Einstellen des Durchsatzes der rückgeführten Abgase und Aufteilungsmittel (38), die die rückgeführten Abgase zwischen dem Kühler (16) für rückgeführte Abgase und der zweiten Umleitung (40) aufteilen, umfassen.

10. Wärmeaustauschmodul nach Anspruch 9, **dadurch gekennzeichnet, dass** die Durchsatzregulierungsmittel (36) für die rückgeführten Abgase und die Aufteilungsmittel (38) für die rückgeführten Abgase ein kombiniertes Ventil (82) umfassen.

11. Wärmeaustauschmodul nach Anspruch 10, **dadurch gekennzeichnet, das** das kombinierte Ventil (82) ein bewegliches Organ (100) umfasst, das rotatorisch angebracht ist und wahlweise eine erste Öffnung (94), die in einer Sitzwand (92) ausgebildet ist und mit dem Kühler für die rückgeführten Abgase kommuniziert, oder eine zweite Öffnung (96), die in der Sitzwand (92) ausgebildet ist und mit der zweiten Umleitung (40) kommuniziert, verschließen kann, wobei das bewegliche Organ (100) außerdem zwischen einer sitznahen Position und einer sitzfernen Position axial verlagerbar ist.

12. Wärmeaustauschmodul nach einem der Ansprüche 10 und 11, **dadurch gekennzeichnet, dass** das kombinierte Ventil (82) einen Körper (84) umfasst, der mit einem Eintrittsrohr (86) für die rückgeführten Abgase und mit einem Befestigungssteg (88) für seine Montage an dem Gehäuse (12) versehen ist.

13. Wärmeaustauschmodul nach Anspruch 1, **dadurch gekennzeichnet, dass** die Austrittskammer (42) des Gehäuses (12) das Plenum einer Einlasskammer einer Brennkraftmaschine bildet.
